Europäisches Patentamt

European Patent Office

Office européen des brevets

(11) Publication number: **0 363 096**
**A1**

## EUROPEAN PATENT APPLICATION

(21) Application number: 89309965.5

(51) Int. Cl.5: **G06F 15/16**

(22) Date of filing: 29.09.89

(30) Priority: 06.10.88 GB 8823510

(43) Date of publication of application:
11.04.90 Bulletin 90/15

(84) Designated Contracting States:
BE DE FR GB NL

(71) Applicant: **INTERNATIONAL COMPUTERS LIMITED**
**ICL House**
**Putney, London, SW15 1SW(GB)**

(72) Inventor: **Curran, Michael William Berry**
**15, Willow Lane**
**Goostrey Cheshire, CW4 8PP(GB)**
Inventor: **Taylor, Richard Norcott**
**25, Daven Road**
**Congleton Cheshire CW12 3RA(GB)**
Inventor: **Piekarski, Marek Stephen**
**20, Gawsworth Road Macclesfield**
**Cheshire SK11 8UE(GB)**

(74) Representative: **Guyatt, Derek Charles et al**
**STC Patents West Road**
**Harlow Essex CM20 2SH(GB)**

(54) Data processing system.

(57) A data processing system comprises a number of modules connected together by a bus. When the system is initially powered up, the bus is interrogated to determine the actual configuration of modules on the bus. This actual configuration is then compared with the expected configuration, held in a memory. If they do not match, and if the actual configuration is potentially dangerous, the power supply is immediately switched off to prevent electrical damage. Otherwise, a bootstrap procedure is initiated for loading programs into the system for normal operation.

FIG.1

# DATA PROCESSING SYSTEM.

This invention relates to data processing systems.

It is known to construct a data processing system as a plurality of modules, connected together by a system bus. This modular construction allows modules to be added or replaced according to requirements. The modules may be obtained from the same manufacturer or from different manufacturers.

A problem with such a system is that the different modules may not be fully electrically compatible with each other, and this may lead to impermissible, potentially dangerous configurations on the bus. For example, different modules may use individual lines of the bus in different ways. As a result, two modules may attempt to drive the same bus line simultaneously, which could lead to electrical damage to the bus or the modules.

The object of the present invention is to provide a way of protecting against this danger.

Summary of the Invention.

According to the invention there is provided a data processing system comprising:

(a) a plurality of modules, connected together by a bus,

(b) a main power supply for providing power to the modules, and

(c) means for interrogating the bus to determine the configuration of the modules connected to the bus and, if the configuration is impermissible, switching off the main power supply.

Brief description of the drawings.

One data processing system embodying the invention will now be described by way of example with reference to the accompanying drawings.

Figure 1 is a block diagram of the overall system.

Figure 2 is a flow diagram showing the operation of a central services module.

Figure 3 is a flow diagram showing a defined bootstrap procedure.

Figure 4 is a flow diagram showing an undefined bootstrap procedure.

Figure 5 is a flow diagram showing the operation of a processing module.

Description of an embodiment of the invention.

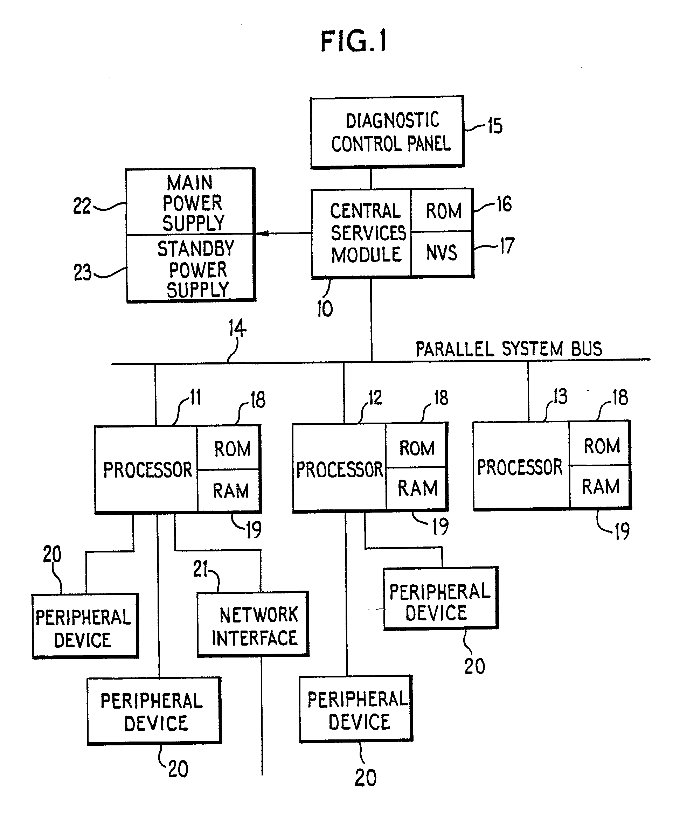

Referring to Figure 1, the data processing system comprises a central services module (CSM) 10, and a number of processing modules 11, 12, 13. The modules 10-13 are all interconnected by a parallel system bus 14.

The purpose of the CSM is to provide overall administration of the system. In particular, as will be described in more detail later, the CSM controls the bootstrap procedures for loading programs.

The CSM is provided with a diagnostic control panel 15 which comprises a display screen and a number of manually operable keys. The screen allows the system to display messages, such as diagnostic messages, or menus. The keys allow the system user to respond to the diagnostic messages, or to select options from menus.

THe CSM includes a read-only memory (ROM) 16 which holds firmware for the CSM. The CSM also includes a battery-backed memory 17, referred to herein as the non-volatile store (NVS), which preserves information even when the power supply to the CSM is switched off.

Each of the processing modules 11-13 comprises a processing unit having a ROM 18 for holding firmware, and a random-access memory (RAM) 19 for holding programs and data.

In the present example, two of the processing modules 11 and 12 act as input/output controllers, and are connected to peripheral devices 20 such as disc files and magnetic tape units. Also, in this example, the processing module 11 is connected by way of an interface 21 to a local area or wide area network, to allow it to communicate with other computer systems. The processing module 13, on the other hand, is dedicated to processing data, and has no peripherals or network connections.

The non-volatile store 17 is used in established systems to hold various items of system information, including the following.

(a) A system configuration table: this indicates the types of modules connected to the various slots of the system.

(b) Normal load route NLR: this indicates the normal bootstrap load path for the system.

(c) Alternative load route ALR: this identifies an alternative bootstrap load path which can be used if the normal bootstrap load path fails.

The system includes a power supply unit, comprising a main power supply 22 and a standby power supply 23. The main power supply provides power for the whole system, whereas the standby power supply provides power only for the CSM. The power supplies are controlled by CSM. In normal operation, the main power supply is selected. In a standby mode, only the standby power supply is active, and so power dissipation is at a minimum and no forced-air cooling is required for the system.

## Operation of CSM.

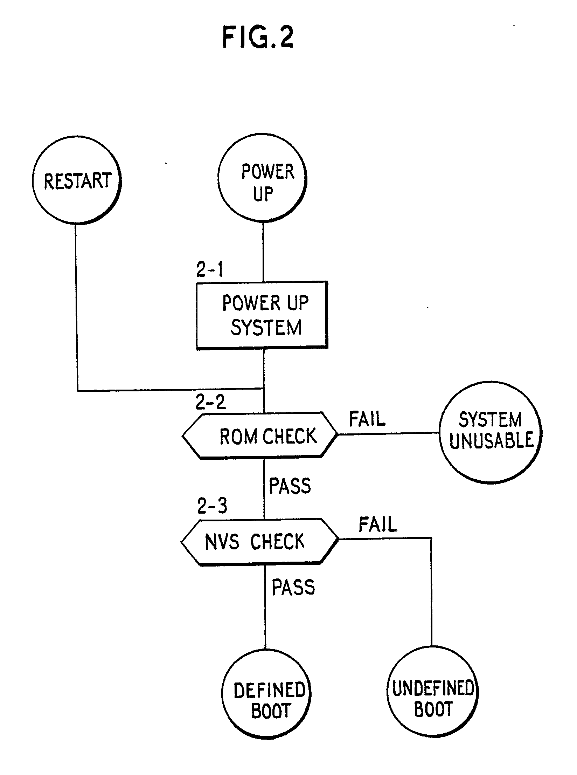

Referring to Figure 2, this shows the operation of the CSM.

As mentioned above, in the standby mode the CSM is powered by the standby power supply, and the rest of the system is unpowered. In this state, the CSM instructs the diagnostic control panel 15 to display a menu. One option on this menu is to power-up the system.

(2-1) When the power-up is selected, the CSM switches on the main power supply, so that all the other modules in the system are now powered.

(2-2) The CSM then performs a sum check on the contents of its ROM. Failure of this check means that the system is unusable and so the CSM displays an error message and then halts.

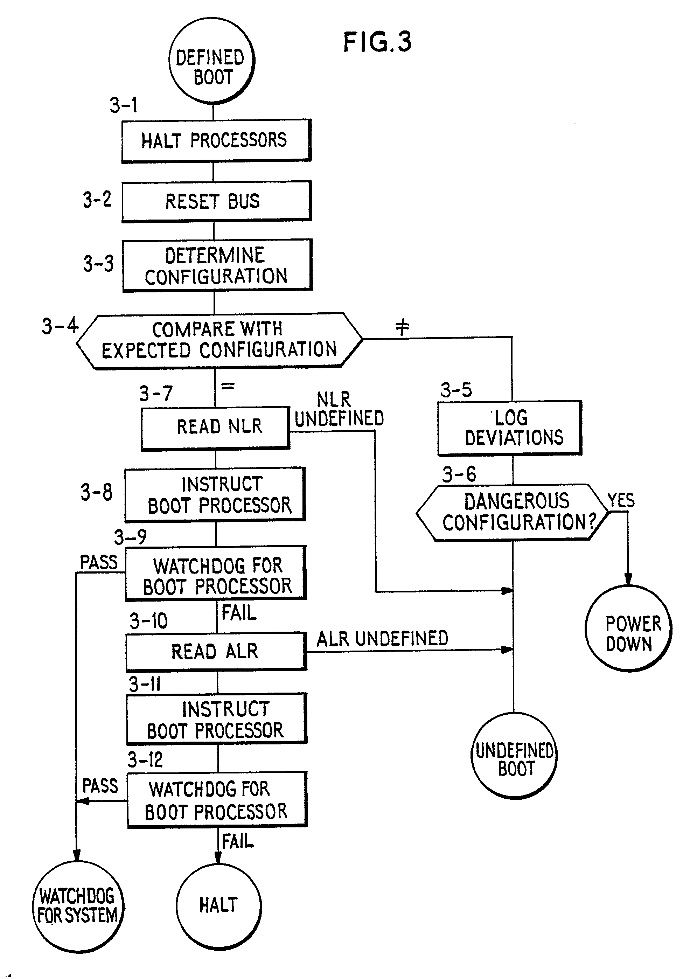

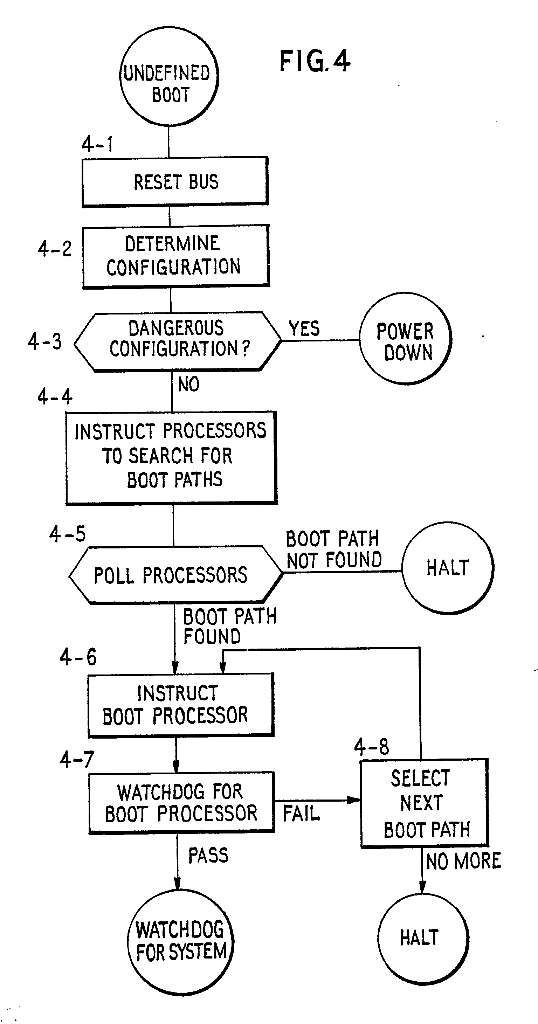

(2-3) If the ROM check is satisfactory, the CSM performs a similar check on the contents of the NVS. If this check is satisfactory, the CSM proceeds with a defined bootstrap procedure, to be described below with reference to Figure 3. If, on the other hand, the NVS check fails, then the CSM proceeds with an undefined bootstrap procedure, to be described below with reference to Figure 4.

If the system is re-started at any time, the action of the CSM is similar to that described above, except that in this case, as shown in Figure 2, it is not necessary to power-up the system, since in this case the system will already be powered up.

## Defined bootstrap.

Referring now to Figure 3, this shows the defined bootstrap procedure performed by the CSM.

(3-1) The CSM halts all the processing modules in the system by sending a HALT command over the system bus. The CSM checks that all the processing modules have halted as instructed. If they have not all halted within a predetermined timeout period (one second in this example), a CSM produces a diagnostic error message on the diagnostic control panel. The step of halting the processing module is necessary only if the bootstrap procedure is being performed as the result of a system reset; it is omitted in the case of a power-up.

(3-2) The CSM then resets the system bus. As will be described later, this causes each processing module to be reset and then to run a self-test routine.

(3-3) The CSM then interrogates in turn each slot position of the system bus, so as to determine whether a processing module is connected to that slot and to read the status of that processing module. In this way, the CSM can discover the actual configuration of the system.

(3-4) The actual configuration of the system is compared with the expected configuration, held in the non-volatile store 17. The actual configuration may differ from the expected configuration either because the system has been modified in some way, or because the non-volatile store has not yet been initialised.

(3-5) If the actual configuration does not match the expected configuration, the deviations are recorded in an event log, held in the non-volatile store 17. A diagnostic message is displayed on the diagnostic control panel 15.

(3-6) The actual configuration is then checked to determine whether it is potentially dangerous. For example, the system may include two or more different types of processing module which make use of the individual lines of the system bus in different ways. This is considered to be dangerous, since it is possible that two modules may attempt to drive the same bus line simultaneously, and this could result in electrical damage to the bus or to the modules.

If a dangerous configuration is detected, the CSM immediately switches off the main power supply, so as to prevent any damage. The CSM continues running on the standby power supply, and displays a diagnostic message.

If the configuration is not dangerous then the CSM initiates the undefined bootstrap procedure (Figure 4).

(3-7) If the actual configuration matches the expected configuration, the action is as follows. First, the CSM reads the normal load route NLR from the non-volatile store. As mentioned above, NLR specifies the normal bootstrap load path for the system. More specifically, it defines which one of the processing modules is to act as "boot processor", for performing the actual bootstrap operation, and specifies the peripheral device, or network interface, from which the bootstrap program is to be loaded. Alternatively, NLR may be an "undefined" code, in which case an exit is made to the undefined bootstrap procedure (Figure 4).

(3-8) Assuming that NLR is not undefined, the next step is to send an instruction over the bus to specified processing module, requesting it to assume the role of boot processor.

As will be described later in more detail, the selected boot processor will then read in a bootstrap program from the specified peripheral device or interface. It will then execute this bootstrap program, to perform various system tests, and then to load operational programs into all the processing modules, including itself.

(3-9) While the boot processor is executing the bootstrap, the CSM runs in a watchdog mode, in which it monitors the operation of the boot processor, If the CSM detects that the bootstrap program has been successfully completed, it continues to act as a watchdog for the system in normal operation.

(3-10) If the bootstrap fails the CSM displays a diagnostic message. It then accesses the non-volatile store to read the alternative load route ALR. This specifies a particular processing module to act as boot processor (which may be the same as that specified by NLR) and a particular peripheral device from which the bootstrap program is to be loaded. Alternatively, ALR may be an "undefined" code, in which case an exit is made to the undefined bootstrap procedure.

(3-11) Assuming that ALR is not undefined, the CSM instructs the specified processing module to assume the role of boot processor.

(3-12) While the boot processor is executing the bootstrap, the CSM monitors it. If the bootstrap is successfully completed, the CSM continues to act as a watchdog for the system in normal operation. If, on the other hand, the bootstrap fails, the CSM displays a diagnostic message and halts.

Undefined bootstrap.

Referring now to Figure 4, this shows the undefined bootstrap procedure performed by the CSM.

(4-1) The CSM resets the system bus.

(4-2) The CSM then interrogates in turn each slot position of the system bus, so as to determine the actual configuration of the system.

(4-3) The configuration is then checked to determine whether it is potentially dangerous. If a dangerous configuration is detected, the CSM immediately switches off the main power supply to prevent electrical damage. The CSM continues running on the standby power supply, and displays a diagnostic message.

(4-4) If the configuration is not dangerous, the CSM sends an instruction to each suitable processing module to search for potential bootstrap load paths. Suitable modules are those that are connected to peripheral devices or network interfaces, from which a bootstrap program might be loaded.

When a processing module receives this instruction, it checks all its attached peripheral devices and network interfaces, to determine whether any of them is able to provide a bootstrap program.

The devices are inspected in a predetermined, fixed order, so as to ensure repeatability. All the processing modules that receive the instruction perform this search simultaneously, in parallel.

(4-5) The CSM then polls the modules to discover whether any potential bootstrap load paths have been found. This polling is done in a fixed, predetermined order, so as to ensure repeatability. If no bootstrap path is found, then the CSM displays a diagnostic message and halts.

(4-6) Assuming that a potential bootstrap load path is found, the CSM identifies the type of bootstrap. It then instructs the processing module that found this path to act as the boot processor.

(4-7) While the boot processor is executing the bootstrap, the CSM runs in the watchdog mode, monitoring the operation of the boot processor. If the bootstrap is successfully completed, the CSM continues to act as watchdog for the system in normal operation.

(4-8) If, on the other hand, the bootstrap fails, then the CSM selects the next potential bootstrap load path (if any), and the above steps are repeated.

Operation of processing module.

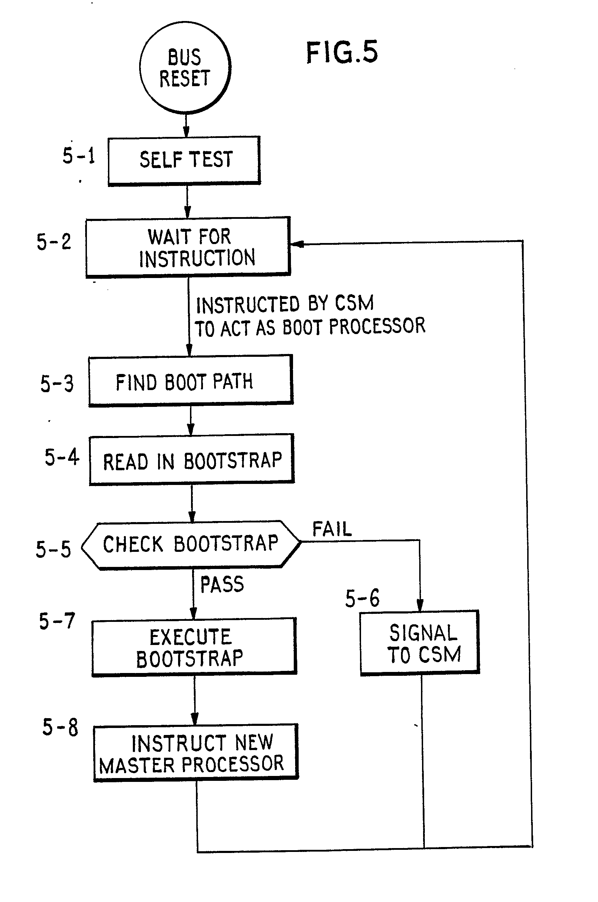

Referring now to Figure 5, this shows the operation of a processing module, following a system bus reset.

(5-1) The first action is to run a self-test program to check the basic facilities of the module. This self-test program is non-corrupting, in the sense that it does not overwrite any data which may be required to be printed out in a diagnostic dump.

(5-2) The processing module then waits for an instruction over the system bus.

(5-3) If the module receives an instruction from the CSM to act as boot processor, the action is as follows. First, the module finds the bootstrap load path i.e. which peripheral or network interface is to be used for loading the bootstrap. In the case of a defined boot, this involves interrogating the non-volatile store in the CSM, to read NLR or ALR.

(5-3) The module then reads in the bootstrap program from the specified peripheral or network interface, into its own RAM.

(5-5) The bootstrap program is checked to ensure that it is suitable for this processing module. A sum check is also performed on the bootstrap program.

(5-6) If the checks fail, a message is sent back to the CSM to report the failure, and the processing module returns to its waiting state.

(5-7) Assuming the these checks are satisfactory, the boot processor now starts executing the bootstrap program. This causes each processing module to undergo further tests, and to load its operational programs from the selected peripheral device or network interface.

(5-8) When all the processing modules have been successfully loaded, the boot processor selects one of the modules to act as the system master, and notifies the CSM. The boot processor instructs the selected module to assume the role of master, and then returns to the waiting state.
The new system master will then start executing its loaded operational programs, and will start up the rest of the system. The system then runs in the normal manner.

In summary, it can be seen that the system descr ied above provides two different bootstrap procedures.

(a) Defined bootstrap. This is the normal procedure when the system is powered up or restarted. This procedure is relatively fast, since the required bootstrap load path is specified in the non-volatile store, and so it is not necessary to search for potential bootstrap load paths.

(b) Undefined bootstrap. This procedure is entered automatically whenever the non-volatile store appears not to have been set up: for example, if its sum check fails or if the expected configuration does not match the actual configuration. This is slower than the defined bootstrap procedure, since it involves searching for potential bootstrap load paths.

## Claims

1. A data processing system comprising:

(a) a plurality of modules (11), connected together by a bus (14),

(b) a main power supply (22) for providing power to the modules, and

(c) means (10) for interrogating the bus to determine the configuration of the modules connected to the bus and, if the configuration is potentially dangerous, switching off the main power supply.

2. A data processing system comprising:

(a) a plurality of modules (11), connected together by a bus (14),

(b) a main power supply (22) for providing power to the modules, and

(c) a memory (17), for holding an expected system configuration,

(d) wherein, in operation, whenever the main power supply is switched on, the bus is interrogated to determine the actual configuration of the modules connected to the bus, and the actual configuration is compared with the expected configuration,

(e) and wherein, if the actual configuration does not match the expected configuration, and if the actual configuration is impermissible, the main power supply is switched off.

3. A system, according to claim 2 wherein, if the actual configuration matches the expected configuration, or if the actual configuration is permissible, a bootstrap procedure is initiated for loading programs into the system.

4. A system according to any preceding claim wherein the interrogation of the bus is performed by a central services module, connected to the bus.

5. A data processing system according to claim 4 further including a stand-by power supply (23) for providing power for the central services module (10) when the main power supply (20) is switched off.

# FIG.1

# FIG.2

# FIG.3

**DEFINED BOOT**

3-1 HALT PROCESSORS

3-2 RESET BUS

3-3 DETERMINE CONFIGURATION

3-4 COMPARE WITH EXPECTED CONFIGURATION

≠

=

3-7 READ NLR

NLR UNDEFINED

3-5 LOG DEVIATIONS

3-8 INSTRUCT BOOT PROCESSOR

3-6 DANGEROUS CONFIGURATION?  YES

3-9 WATCHDOG FOR BOOT PROCESSOR

PASS

FAIL

3-10 READ ALR

ALR UNDEFINED

POWER DOWN

3-11 INSTRUCT BOOT PROCESSOR

3-12 WATCHDOG FOR BOOT PROCESSOR

PASS

FAIL

UNDEFINED BOOT

WATCHDOG FOR SYSTEM

HALT

# FIG.4

UNDEFINED BOOT

4-1 RESET BUS

4-2 DETERMINE CONFIGURATION

4-3 DANGEROUS CONFIGURATION ? — YES → POWER DOWN

NO

4-4 INSTRUCT PROCESSORS TO SEARCH FOR BOOT PATHS

4-5 POLL PROCESSORS — BOOT PATH NOT FOUND → HALT

BOOT PATH FOUND

4-6 INSTRUCT BOOT PROCESSOR

4-7 WATCHDOG FOR BOOT PROCESSOR — FAIL → 4-8 SELECT NEXT BOOT PATH

PASS

WATCHDOG FOR SYSTEM

NO MORE → HALT

FIG.5

BUS
RESET

5-1 SELF TEST

5-2 WAIT FOR
INSTRUCTION

INSTRUCTED BY CSM
TO ACT AS BOOT PROCESSOR

5-3 FIND BOOT PATH

5-4 READ IN BOOTSTRAP

5-5 CHECK BOOTSTRAP    FAIL

PASS

5-6

5-7 EXECUTE
BOOTSTRAP

SIGNAL
TO CSM

5-8 INSTRUCT NEW
MASTER PROCESSOR

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 070 704 (CALLE et al.) * Abstract; figures 1,3 * | 1 | G 06 F 15/16 |
| A | EP-A-0 088 364 (ELECTRONICS CORP. OF AMERICA) * Abstract * | 1 | |
| A | US-A-4 562 535 (VINCENT et al.) * Abstract; figure 2 * | 1 | |

TECHNICAL FIELDS
SEARCHED (Int. Cl.5)

G 06 F

The present search report has been drawn up for all claims

| Place of search | Date of completion of the search | Examiner |
|---|---|---|
| THE HAGUE | 11-12-1989 | NYGREN P.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .......................................................................

& : member of the same patent family, corresponding document

EPO FORM 1503 03.82 (P0401)